# EUROPÄISCHE PATENTSCHRIFT

(11) **EP 3 976 549 B1**
(45) Veröffentlichungstag und Bekanntmachung des Hinweises auf die Patenterteilung: **17.05.2023**
(21) Anmeldenummer: 20728051.2
(22) Anmeldetag: 28.05.2020
(51) Int. Cl.: C04B 26/14, C04B 26/16, C04B 28/08, C04B 111/00, C04B 111/70, C04B 111/94

(54) **SCHLACKE-HALTIGER POLYMERBETON UND VERGUSSMÖRTEL**
SLAG-CONTAINING POLYMER CONCRETE AND GROUTING MORTAR
BÉTON POLYMÈRE CONTENANT DES SCORIES ET MORTIER DE SCELLEMENT

(30) Priorität: 28.05.2019 EP 19177000
(43) Veröffentlichungstag der Anmeldung: 06.04.2022
(60) Teilanmeldung: 23166747.8
(73) Patentinhaber: Sika Technology AG, 6340 Baar (CH)
(72) Erfinder: KELCH, Steffen, 8102 Oberengstringen (CH); MAMIE, Tim, 8004 Zürich (CH); MOSER, Thomas, 8048 Zürich (CH); VELTEN, Ulf, 8955 Oetwil an der Limmat (CH)
(74) Vertreter: Sika Patent Attorneys
(86) Internationale Anmeldenummer: PCT/EP2020/064821
(87) Internationale Veröffentlichungsnummer: WO 2020/239900

(56) Entgegenhaltungen:
- EP-A1- 0 786 439
- JP-A- H0 930 854
- KR-A- 20110 119 899
- KR-B1- 100 941 284
- KR-B1- 101 705 893
- US-A1- 2017 121 918

## Beschreibung

### Technisches Gebiet

Die Erfindung betrifft die Verwendung von Schlacke als Füllstoff in Polymerbeton und -mörtel.

### Stand der Technik

Polymerbeton ist ein wasserundurchlässiger Werkstoff, der typischerweise ein organisches Bindemittel und Füllstoffe enthält. Im Gegensatz zu üblichem Beton, bei dem der Zement als Bindemittel nach dem Aushärten mit Wasser die Füllstoffe zusammenhält, ist es bei Polymerbeton ein organisches Polymer, das als Bindemittel wirkt. Polymerbeton enthält typischerweise keinen Zement als Bindemittel. Der Füllstoff in Polymerbeton besteht typischerweise aus natürlichem Gestein, wie beispielsweise Granit, Quarz, Basalt, Kalkstein, Blähton, Perlit oder anderen mineralischen Rohstoffen, in unterschiedlichen Korngrössen. Füllstoffe werden eingesetzt, um die mechanischen, elektrischen und/oder Verarbeitungseigenschaften von Materialien zu ändern, und gleichzeitig den Anteil der typischerweise teureren Matrix im fertigen Produkt deutlich zu verringern. Darüber hinaus sorgt die Anwesenheit der Füllstoffkörner dafür, den Volumenschrumpf des Polymerbetons nach der Aushärtung von reaktiv vernetzenden Polymermatrices signifikant zu vermindern und dessen Druckfestigkeit zu erhöhen.

Das aushärtbare flüssige organische Bindemittel, typischerweise bestehend aus mindestens zwei Komponenten, wird typischerweise nach dem Vermischen der Bindemittelkomponenten mit dem Füllstoff vermischt, in Form gebracht und aushärten gelassen.

In Epoxidharz-basiertem Polymerbeton besteht das aushärtbare Bindemittel aus einem aushärtbaren Epoxidharz und einem Härter für das Epoxidharz, die nach dem Vermischen zu einem ausgehärteten Epoxidharz reagieren. In Polyurethan-basiertem Polymerbeton besteht das aushärtbare Bindemittel aus einem Polyisocyanat und einer Polyolmischung, die nach dem Vermischen zu einem Polyurethan reagieren. Epoxidharze und Polyurethane haben gegenüber anderen organischen Bindemitteln, wie beispielsweise ungesättigten Polyesterharzen oder Acrylharzen, den Vorteil, dass sie keine Peroxide und/oder Hitze für die Härtung benötigen. Peroxide sind Gefahrenstoffe. Epoxidharz und Härter sowie Polyisocyanat und Polyol können auch bei kühlen Temperaturen gut aushärten. Epoxidharz- und Polyurethan-basierte Polymerbetone zeichnet sich durch hohe Festigkeit, Frostbeständigkeit, Abriebkonsistenz und Materialbeständigkeit sowie eine geschlossene und wasserdichte Oberfläche aus.

Der steigende Bedarf an Baustoffen sowie Umweltschutzauflagen führen zur Verknappung von natürlichen Rohstoffen, die als Füllstoffe eingesetzt werden können. Das gilt insbesondere für Quarzsand und Quarzkies. Es gibt daher Bestrebungen, die natürlichen Rohstoffe vermehrt durch industrielle Abfallstoffe zu ersetzten. Ein industrieller Abfallstoff, der weltweit in grosser Menge anfällt, ist Schlacke. Sie fällt beispielsweise bei der Gewinnung von Metallen, beim Metallrecycling oder bei der Verbrennung von Haushaltsmüll oder Klärschlamm an. Hüttensand, eine glasige Schlacke aus der Eisengewinnung, wird aufgrund seiner latent hydraulischen Eigenschaft in feingemahlener Form als Zusatz zu Zement und als Zementersatzmaterial eingesetzt. Andere Schlacken, wie beispielsweise Stahlschlacke, die bei der Stahlerzeugung oder dem Stahlrecycling entsteht, oder Kupferschlacke, die bei der Kupfergewinnung anfällt, sind wegen ihrer geringen hydraulischen Eigenschaften als Zementersatz weniger geeignet. Sie werden, wie auch Hochofenschlacke, teilweise als Schotter im Strassenbau, als preisgünstiges Hinterfüllmaterial oder, wie beispielsweise Kupferschlacke, als Strahlmittel eingesetzt.

GB 2460707 beschreibt die Verwendung von Recyclingmaterial als Aggregat für Polymerbeton. Als Teilersatz für die natürlichen Gesteine werden Glassand, Kunststoff-Perlen, zerkleinertes Porzellan oder rezyklierter Polymerbeton verwendet.

WO 2010 030048 beschreibt die Verwendung von "zerstäubter Stahlschlacke" als Bestandteil von Polymerbeton basierend auf einem ungesättigten Polyesterharz. Diese "zerstäubte Stahlschlacke" wird durch ein spezielles Verfahren hergestellt, welches zusätzliche Kosten verursacht und die Schlacke verteuert. Zerstäubte Stahlschlacke ist sowohl mengenmässig als auch örtlich nur begrenzt verfügbar.

JPH 0930854 und US 2017 121918 offenbaren beide schlackehaltige Bindemittelzusammensetzungen.

Es besteht weiterhin der Bedarf nach einem kostengünstigen und qualitativ hochwertigen Ersatz der natürlichen Gesteinskörnung in Polymerbeton durch einen industriellen Abfallstoff. Hierbei sollen die guten Eigenschaften des Polymerbetons erhalten bleiben.

### Darstellung der Erfindung

Aufgabe der vorliegenden Erfindung ist es, einen industriellen Abfallstoff als Ersatz für die natürliche Gesteinskörnung in Epoxidharz- oder Polyurethan-basiertem Polymerbeton zur Verfügung zu stellen, welcher in grossen Mengen und zu geringen Kosten weltweit verfügbar ist und ohne aufwendige Aufbereitung verwendet werden kann.

Überraschenderweise wird diese Aufgabe durch eine Bindemittelzusammensetzung, wie sie in Anspruch 1 beschrieben ist, gelöst.

Bindemittelzusammensetzungen, die auf Epoxidharz und Härter oder Polyisocyanat und Polyol basieren, haben gegenüber anderen organischen Bindemittelzusammensetzungen die auch für Polymerbeton eingesetzt werden, insbesondere gegenüber ungesättigten Polyesterharzen oder Acrylharzen, den Vorteil, dass sie auch bei tiefen Temperaturen wie beispielsweise 5°C oder 10°C gut verarbeitbar und härtbar sind, sowie eine gute Giessfähigkeit und eine gute Verlaufsfähigkeit aufweisen. Bei Epoxidharzbasierten Bindemittelzusammensetzungen kann zudem die Verarbeitungszeit variabel, etwa bis zu einer Stunde, eingestellt werden. Auch werden, im Gegensatz zu den oft hochviskosen ungesättigten Polyesterharzen, keine explosionsgefährlichen Initiatoren, wie etwa Peroxide, zur Härtung benötigt.

Ausserdem ist die Oberfläche der ausgehärteten Bindemittelzusammensetzung auf Basis Epoxidharz fest und nicht klebrig, dies im Gegensatz zu den ungesättigten Polyesterharzen, bei denen die Oberfläche oft schlecht härtet.

Schlacke ist ein Abfallstoff aus der Metallgewinnung, dem Metallrecycling oder der Müllverbrennung und fällt weltweit in sehr grosser Menge an. Ihre Verwendung in Epoxidharz-basiertem Polymerbeton trägt zur Reduktion von Deponien bei und reduziert den Bedarf an qualitativ hochstehender natürlicher Gesteinskörnung, deren Verfügbarkeit immer mehr abnimmt. Überraschenderweise kann Schlacke in hohen Mengenanteilen und ohne Qualitätsverlust in dem Epoxidharz- Polymerbeton eingesetzt werden. Der Polymerbeton auf Basis Epoxidharzder Schlacke enthält, zeigt gute Eigenschaften, wie insbesondere hohe Festigkeit und gute Verarbeitbarkeit, auch wenn der Polymerbeton ganz frei von üblichen Füllstoffen wie insbesondere Quarzsand oder Quarzmehl ist. Überraschenderweise werden die Materialeigenschaften, insbesondere die Druckfestigkeit, im Vergleich zum Stand der Technik, sogar noch verbessert.

Besonders überraschend ist dabei der Umstand, dass der erfindungsgemässe Polymerbeton, insbesondere wenn er Stahlschlacke oder Kupferschlacke enthält, eine verbesserte elektrische Leitfähigkeit aufweist. Zudem kann die thermische Leitfähigkeit ebenfalls verbessert sein.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine aushärtbare Bindemittelzusammensetzung wie in Anspruch 1 definiert.

Unter "Rohdichte" wird im vorliegenden Dokument die Dichte eines Festkörpers verstanden. Die Rohdichte ergibt sich aus dem Quotienten von Gewicht des Festkörpers und dessen Volumen, einschliesslich des eingeschlossenen Porenvolumens.

Aushärtbare organische Bindemittelzusammensetzungen auf Basis Epoxidharz enthalten vernetzbare Epoxidharze mit mehr als einer Epoxidgruppe pro Molekül, die mit geeigneten Härtern unter Ausbildung kovalenter Bindungen zu einem Feststoff reagieren.

Die erfindungsgemässe Bindemittelzusammensetzung ist aushärtbar, da die Epoxidgruppen noch nicht oder erst teilweise reagiert haben.

Schlacke entsteht als Nebenprodukt bei der Gewinnung von Metallen in der Erzverhüttung, dem Metallrecycling oder bei der Abfallverbrennung. Es handelt sich um ein Stoffgemisch, das sich hauptsächlich aus den Oxiden und Silikaten verschiedener Metalle zusammensetzt. Die chemische Zusammensetzung von Schlacken wird typischerweise in Form der Oxide angegeben, unabhängig davon, in welchen Verbindungen die Elemente effektiv vorliegen. So wird beispielsweise der Gehalt an Si als SiO₂, der Gehalt an Al als Al₂O₃ und der Gehalt an Fe als FeO angegeben. So entspricht beispielsweise eine analytisch bestimmte Menge von 10 g Eisen (Fe) einer Menge von 12.9 g FeO. Der bei einer Zusammensetzung von Schlacken angegebene Prozentsatz für Bestandteile bezieht sich hierbei auf den Prozentsatz des Bestandteils als sein Oxid, bezogen auf die Summe aller Bestandteile in der Zusammensetzung, deren Gewicht ebenfalls in Form ihrer Oxide gerechnet wird. Die Hauptinhaltsstoffe von Schlacken sind CaO, SiO₂, Al₂O₃, MgO und FeO. Der Anteil dieser Stoffe in den verschiedenen Schlacketypen kann stark unterschiedlich sein. Die Zusammensetzung der Schlacke kann mit Röntgenfluoreszenzanalyse gemäss DIN EN ISO 12677 bestimmt werden.

Schlacke, insbesondere Schlacke aus der Metallgewinnung oder dem Metallrecycling, wird typischerweise in flüssigem Zustand von der Metallschmelze abgetrennt und, typischerweise in Schlackenbeeten, zur Abkühlung gelagert. Die Abkühlung kann, etwa durch Aufsprühen von Wasser, beschleunigt werden. Der Abkühlungsprozess kann die physikalischen Eigenschaften, insbesondere die Kristallinität und die Korngrösse der Schlacke, beeinflussen.

Hochofenschlacke (HOS) ist Schlacke, die bei der Gewinnung von Roheisen im Hochofen anfällt. Während des Reduktionsprozesses im Hochofen entsteht die Schlacke aus den Begleitmaterialien des Eisenerzes und den zugesetzten Schlackenbildnern wie Kalkstein oder Dolomit. Die Schlacke wird von dem Roheisen getrennt und entweder in Schlackenbeeten langsam abgekühlt, wobei die mehrheitlich kristalline Hochofenstückschlacke entsteht, oder mit Wasser und/oder Luft schnell abgekühlt, wobei der glasige Hüttensand (HS) entsteht. Hochofenschlacken weisen typischerweise einen Gehalt an Eisen, gerechnet als FeO, von unter 3 Gewichts-%, bezogen auf die Gesamtzusammensetzung der Schlacke, und eine Rohdichte von 2.1 bis 2.8 kg/l, auf.

Stahlschlacke fällt bei der Stahlproduktion aus Roheisen oder dem Stahlrecycling als Nebenprodukt an. Für die Stahlerzeugung werden mehrere Verfahren und Schritte eingesetzt, bei denen Stahlschlacke anfällt. Beispiele für Stahlschlacke sind BOS, Basic Oxygen Slag, welche als Nebenprodukt bei der Stahlerzeugung nach dem Sauerstoff-Blasverfahren anfällt, LD-Schlacke, welche bei dem Linz-Donawitz-Verfahren anfällt, oder EOS, ElektroofenSchlacke, auch EAFS für Electric Arc Furnace Slag, die bei der Stahlerzeugung oder dem Stahlrecycling mittels eines Elektrolichtbogenofens anfällt. Weitere Beispiele für Stahlschlacke sind Schlacken, die bei weiteren Stahlreinigungsprozessen anfallen, wie beispielsweise Schlacke aus dem Pfannenofen (Pfannenschlacke oder Ladle Slag). Stahlschlacken weisen typischerweise einen Gehalt an Eisen von etwa 5 bis 45 Gewichts-%, gerechnet als FeO, bezogen auf die Gesamtzusammensetzung der Schlacke, und eine Rohdichte von 3.0-3.7 kg/l, auf.

Weitere Prozesse, bei denen Schlacken anfallen, sind beispielsweise metallurgische Prozesse zur Gewinnung von Nicht-Eisen-Metallen. Diese Schlacken werden als Metallhüttenschlacken bezeichnet und weisen oft einen hohen Gehalt an Eisen auf. Eine solche Metallhüttenschlacke ist Kupferschlacke, die als Nebenprodukt bei der Kupfergewinnung anfällt. Kupferschlacke weist typischerweise einen hohen Gehalt an Eisen, oft von 40 Gewichts-% oder mehr, gerechnet als FeO, auf. Das Eisen in Kupferschlacken liegt typischerweise zu einem Grossteil in Form von Eisensilikat vor. Kupferschlacken haben typischerweise eine Rohdichte im Bereich von 3.7 kg/l.

Schlacken, die in Abfall- oder Klärschlammverbrennungsanlagen anfallen, haben stark unterschiedliche Zusammensetzung. Oft zeichnen sie sich durch einen hohen Gehalt an Eisen aus.

Bevorzugt ist die Schlacke ausgewählt aus der Gruppe bestehend aus Hochofenschlacke, insbesondere Hochofenstückschlacke und Hüttensande, Stahlschlacken, Metallhüttenschlacken, insbesondere Kupferschlacken, und Schlacken aus der Abfallverbrennung, wobei Hochofenschlacken, Stahlschlacken und Metallhüttenschlacken bevorzugt sind. Hochofenschlacken und Stahlschlacken sind weltweit gut erhältlich und weisen typischerweise chargenbedingt nur geringe Schwankungen in ihrer chemischen und mineralogischen Zusammensetzung und den physikalischen Eigenschaften auf. Metallhüttenschlacken, insbesondere Kupferschlacke, zeichnen sich durch hohe Dichte und hohe Festigkeit aus.

Entsprechend der Erfindung ist die Schlacke eine eisenhaltige Schlacke mit mindestens 8 Gewichts-%, insbesondere mindestens 10 Gewichts-%, bevorzugt mindestens 15 Gewichts-%, 20 Gewichts-%, oder 25 Gewichts-%, Eisen, gerechnet als FeO. insbesondere enthält die eisenhaltige Schlacke 10 bis 70 Gewichts-% Eisen, gerechnet als FeO.

Es wurde überraschend festgestellt, dass Schlacken mit einem hohen Gehalt an Eisen in der ausgehärteten Bindemittelzusammensetzung die elektrische und teilweise auch die thermische Leitfähigkeit erhöhen können. Sie sind daher speziell gut geeignet für die Herstellung von Materialien mit verbesserter elektrischer und teilweise auch verbesserter thermischer Leitfähigkeit. insbesondere enthalten Schlacken in den Bindemittelzusammensetzungen, die nach dem Aushärten eine verbesserte elektrische Leitfähigkeit aufweisen sollen, 10 bis 70 Gewichts-%, bevorzugt 15 bis 60 Gewichts-%, Eisen, gerechnet als FeO. Bevorzugt ist die eisenhaltige Schlacke eine Stahlschlacke, insbesondere Schlacke aus dem Elektrolichtbogenofen, der Giesspfanne, dem Linz-Donawitz-Verfahren oder dem Sauerstoff-Blasverfahren, oder Kupferschlacke.

Erfindungsgemäss weist die Schlacke eine Rohdichte von mindestens 2.9 kg/l, bevorzugt mindestens 3.1 kg/l, insbesondere mindestens 3.3 kg/l, im Speziellen mindestens 3.5 kg/l, auf.

Es hat sich gezeigt, dass Bindemittelzusammensetzungen, die Schlacken von hoher Rohdichte enthalten, nach dem Aushärten an der Oberseite (obere Oberfläche) eine Schicht von ausgehärtetem Bindemittel aufweisen können, in der der Anteil an Schlacke im Vergleich zur restlichen ausgehärteten Bindemittelzusammensetzung deutlich kleiner ist. Insbesondere ist der Anteil an Schlacke mit einer Partikelgrösse über 0.1 mm in dieser Schicht unter etwa 10 Gewichts-%, insbesondere unter 5 Gewichts-%. Dies ergibt eine besonders gute Haftung mit einem darüber liegenden Material, was speziell vorteilhaft, beispielsweise für das Verankern von Maschinen und Turbinen durch Untergiessen, ist.

Die bevorzugte Partikelgrösse der Schlacke richtet sich nach der jeweiligen Anwendung und kann bis zu 32 mm oder mehr betragen. Vorteilhaft weist die Schlacke eine Partikelgrösse von maximal 16 mm, bevorzugt maximal 8 mm, mehr bevorzugt maximal 4 mm, im Speziellen maximal 3.5 mm, auf. Schlackepartikel von geeigneter Grösse können auch durch Brechen und/oder Mahlen von grösseren Schlackepartikeln erhalten werden.

Die Partikelgrösse kann durch ein Siebverfahren gemäss DIN EN 933-1 bestimmt werden.

Die Schlacke kann, beispielsweise durch Sieben, in Korngrössenfraktionen getrennt werden und die einzelnen Korngrössenfraktionen können anschliessend in unterschiedlichen Mengen gemischt werden, um eine gewünschte Korngrössenverteilung, die Sieblinie, zu erhalten. Solche Verfahren sind dem Fachmann bekannt.

Vorteilhaft weist die Schlacke eine Partikelgrösse von 0.05 bis 16 mm, bevorzugt 0.06 bis 8 mm, mehr bevorzugt 0.1 bis 4 mm, im Speziellen 0.12 bis 3.5 mm, auf.

Bevorzugt weisen die Schlackepartikel eine unregelmässige Form und/oder eine raue Oberfläche auf und sind insbesondere nicht kugelförmig. Dies ist vorteilhaft, insbesondere für eine Verzahnung der Partikel untereinander und für einen guten Verbund mit dem Bindemittel.

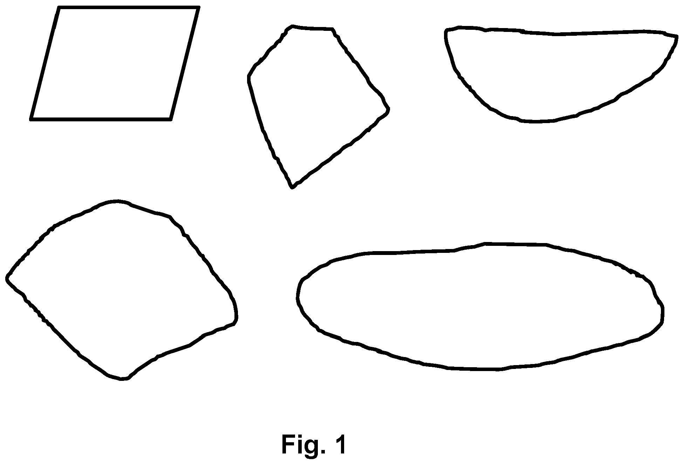

Insbesondere können die Schlackepartikel jede nicht kugelförmige geometrische Form, entweder gleichförmig oder uneinheitlich, aufweisen. Beispielsweise können die Partikel eine konische, polygonale, kubische, fünfeckige, sechseckige, achteckige, prismatische und/oder polyedrische Form aufweisen. Uneinheitliche Partikel können beispielsweise kreisförmige, elliptische, ovale, quadratische, rechteckige, dreieckige oder mehreckige Querschnitte aufweisen, die sich zumindest teilweise darin befinden. Die Ausdrücke "uneinheitlich" oder "irregulär" geformte Partikel beziehen sich auf dreidimensionale Partikelformen wobei mindestens zwei unterschiedliche Querschnitte durch die Partikel eine unterschiedliche Form aufweisen. Beispielhafte Querschnitte durch Schlackepartikel mit unregelmässiger Form sind schematisch in Fig. 1 dargestellt. Eine Übersicht geeigneter Partikelformen bietet S. Blott, K. Pye "Particle shape: a review and new methods of characterization and classification" in Sedimentology (2008) 55, 31-63.

Bevorzugt wird eine Schlacke, insbesondere eine Stahlschlacke, die, insbesondere in Schlackenbeeten, mit Wasser abgekühlt wurde. Ebenso vorteilhaft ist eine Schlacke, insbesondere eine Kupferschlacke, die als Schlackenstrom mit einem Druckwasserstrahl granuliert wurde.

Durch das raschere Abkühlen bricht die Schlacke in kleine Stücke. Das ist vorteilhaft, weil dadurch Energie für das Zerkleinern eingespart werden kann und auch, weil dadurch eine unregelmässige, oft kantige Form entsteht.

Bevorzugt liegt der Feuchtegehalt der Schlacke unter 5 Gewichts-%, mehr bevorzugt unter 3 Gewichts-%, speziell bevorzugt unter 1 Gewichts-%, insbesondere unter 0.5 Gewichts-%.

Für gewisse Anwendungen kann es vorteilhaft sein, wenn die Porosität der Schlacke im Bereich von 5 Vol-% liegt. Damit kann das Gewicht des Produktes ohne grosse Beeinträchtigung der Endeigenschaften reduziert werden.

Für gewisse Anwendungen kann es auch vorteilhaft sein, wenn die Porosität der Schlacke über 5 Vol-% liegt, damit kann das Gewicht des Produktes gesenkt werden. Für gewisse Anwendungen, speziell für hoch druckfeste Materialien, kann es auch vorteilhaft sein, wenn die Porosität der Schlacke unter 5 Vol-%, bevorzugt unter 3 Vol-%, liegt.

Die Schlacke kann zusätzlich oberflächenmodifiziert sein. Zum Beispiel ist es möglich, dass die Oberfläche der Schlackepartikel mit einem netzmittel und/oder einem Kopplungshilfsmittel beschichtet oder belegt ist. Es ist im Rahmen der vorliegenden Erfindung jedoch bevorzugt, dass die Oberfläche der Schlacke nicht modifiziert ist, dass die Schlacke also nicht oberflächenmodifiziert vorliegt.

Die Bindemittelzusammensetzung enthält vorteilhaft neben der Schlacke noch mindestens einen weiteren mineralischen Füllstoff. Füllstoffe sind chemisch inerte, feste, partikuläre Stoffe und werden in verschiedenen Formen, Grössen und als unterschiedliche Materialien angeboten. Die Formen mineralischer Füllstoffe können von feinen Sandpartikeln bis zu grossen groben Steinen variieren. Besonders geeignete Füllstoffe sind Sand, Kies, zerkleinerte Steine, kalzinierte Kiesel oder leichte Füllstoffe, wie insbesondere Tonmineralien, Bimsstein oder Perlit. Weitere geeignete Füllstoffe sind feine Füllstoffe wie Kalksteinmehl, Kreide, Quarzmehl, Titandioxid, Schwerspatmehl oder pulverförmiges Aluminiumoxid. Vorteilhaft werden unterschiedliche Füllstoffe nach Art und/oder Partikelgrösse gemischt.

Die Partikelgrösse des mindestens einen weiteren Füllstoffs richtet sich nach der jeweiligen Anwendung und kann bis zu 32 mm oder mehr betragen. Bevorzugt liegt die Partikelgrösse bei maximal 16 mm, speziell bevorzugt bei maximal 8 mm. Die Partikelgrösse liegt besonders bevorzugt unter 4 mm. Vorteilhaft ist eine Partikelgrösse im Bereich von etwa 0.1 µm bis 3.5 mm.

Die Partikelgrösse kann durch ein Siebverfahren gemäss DIN EN 933-1 bestimmt werden.

Vorteilhaft werden Füllstoffe von unterschiedlicher Partikelgrösse entsprechend der gewünschten Sieblinie gemischt. Geeignete Sieblinien für verschiedene Anwendungen sind dem Fachmann bekannt.

Vorteilhaft ist der mindestens eine weitere mineralische Füllstoff ausgewählt aus der Gruppe bestehend aus Kalksteinmehl, Kreide, Quarzmehl, Silicastaub (amorphes SiO₂), Titandioxid, Schwerspatmehl und Aluminiumoxid, bevorzugt mit einer Partikelgrösse von maximal 0.1 mm.

In einer vorteilhaften Ausführungsform der Erfindung ist die Bindemittelzusammensetzung bevorzugt weitgehend frei von Quarzsand und Quarzmehl. Insbesondere enthält sie weniger als 10 Gewichts-%, bevorzugt weniger als 5 Gewichts-%, besonders bevorzugt weniger als 1 Gewichts-%, Quarzsand und/oder Quarzmehl. Eine solche Zusammensetzung schont die natürlichen Ressourcen und ermöglicht gute bis sehr gute Eigenschaften bei der Verarbeitung, bei der Aushärtung und im Gebrauch.

Bevorzugt enthält die Bindemittelzusammensetzung Schlacke mit einer Partikelgrösse von mehr als 0.1 mm und feinen mineralischen Füllstoff, der keine Schlacke ist, mit einer Partikelgrösse von maximal 0.1 mm und keine weiteren Füllstoffe. Solche Zusammensetzungen lassen sich gut verarbeiten und geben gute Festigkeit nach dem Aushärten.

Bevorzugt ist ein Masseverhältnis von Schlacke zu dem mindestens einen weiteren mineralischen Füllstoff, insbesondere mit einer Partikelgrösse von maximal 0.1 mm, von 100:0 bis 60:40, insbesondere von 80:20 bis 70:30. Ein solches Verhältnis bewirkt eine gute Packung der mineralischen Füllstoffe und eine gute Festigkeit der ausgehärteten Bindemittelzusammensetzung. Vorteilhaft weist die Schlacke in diesem Fall eine Partikelgrösse von mehr als 0.1 mm auf.

Es kann aber auch vorteilhaft sein, wenn die Bindemittelzusammensetzung keinen weiteren Füllstoff enthält. Die Schlacke umfasst in diesem Fall alle mineralischen Partikel mit einer Grösse von etwa 0.1 µm bis zu 1 mm, 2 mm, 4 mm, 8 mm, oder mehr. Dies ist insbesondere vorteilhaft für eine maximale Verwertung der Schlacke und eine gute Festigkeit der ausgehärteten Bindemittelzusammensetzung, sowie, insbesondere bei eisenhaltigen Schlacken, eine verbesserte elektrische und teilweise auch verbesserte thermische Leitfähigkeit.

Gemäß der vorliegenden Erfindung umfasst das organische Bindemittel in der aushärtbaren Bindemittelzusammensetzung mindestens ein Epoxidharz und mindestens einen Härter für das Epoxidharz. Epoxidharze sind niedermolekulare oder polymere Verbindungen, die Epoxidgruppen aufweisen. Geeignete Epoxidharze zur Herstellung von Kunststoffen sind im Stand der Technik bekannt und kommerziell erhältlich. Sofern die Epoxidharze mit einer definierten genauen Anzahl von Epoxidgruppen pro Molekül ausgestattet sind, weisen sie bevorzugt mindestens zwei Epoxidgruppen pro Molekül auf, beispielsweise zwei, drei, vier oder mehr Epoxidgruppen pro Molekül. Sofern das Epoxidharz ein Polymer mit variierender Anzahl von Epoxidgruppen im Molekül ist, weist es im Mittel mehr als eine Epoxidgruppe pro Molekül auf. Das Epoxidharz enthält dann bevorzugt durchschnittlich mindestens zwei Epoxidgruppen pro Molekül. Erfindungsgemäss können Gemische verschiedener Epoxidharze eingesetzt werden, beispielsweise von zwei, drei oder mehr verschiedenen Epoxidharzen. Ein geeignetes Epoxidharz wird auf bekannte Art und Weise erhalten, insbesondere aus der Oxidation von Olefinen oder aus der Reaktion von Epichlorhydrin mit Polyolen, Polyphenolen oder Aminen.

Geeignete Epoxidharze sind insbesondere aromatische Epoxidharze, insbesondere die Glycidylether von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan. Diese Epoxidharze weisen die Formel (I) auf: 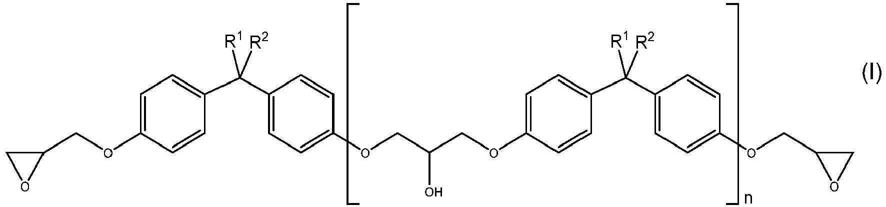
   Dabei stehen die Substituenten R¹ und R² unabhängig voneinander entweder für H oder CH₃. Weiterhin steht der Index n für einen Wert von 0 bis 1. Bevorzugt steht n für einen Wert von kleiner als 0.2.
   Solche Epoxidharze sind beispielsweise als Araldite^{®} GY250, Araldite^{®} PY304, Araldite^{®} GY282 (Huntsman) oder D. E. R.^{™} 331 oder D.E.R. ^{™} 330 (Dow) oder Epikote 828 oder Epikote 862 (Hexion) erhältlich.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)-hexan, 4,4-Bis(4-hydroxyphenyl)heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenyl-ethan, 1,4-Bis[2-(4-hydroxyphenyl)-2-propyl]benzol (Bisphenol-P), 1,3-Bis-[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind;
   Solche Epoxidharze sind unter dem Handelsnamen EPN oder ECN sowie Tactix^{®}556 von Huntsman oder unter der Produktereihe D.E.N.^{™} von Dow Chemical kommerziell erhältlich.
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂-bis C₃₃-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin;
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Bevorzugt ist das Epoxidharz ein Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25°C bezeichnet.

Gegebenenfalls enthält die Epoxidharzzusammensetzung zusätzlich Anteile von Epoxid-Festharz.

Das Epoxidharz ist insbesondere ein Flüssigharz auf der Basis eines Bisphenols, insbesondere eines Bisphenol-A Diglycidylethers und/oder Bisphenol-F-Diglycidylethers, wie sie kommerziell beispielsweise von Olin, Huntsman oder Momentive erhältlich sind. Diese Flüssigharze weisen eine für Epoxidharze niedrige Viskosität auf und ermöglichen eine schnelle Aushärtung und das Erhalten hochmoduliger und hoch druckfester Materialien. Sie können Anteile von Bisphenol A-Festharz oder Novolak-Glycidylethern enthalten.

Die Bindemittelzusammensetzung auf Basis Epoxidharz enthält bevorzugt noch zusätzlich mindestens einen Reaktivverdünner.

Geeignete Reaktivverdünner sind niederviskose, aliphatische oder cycloaliphatische Epoxidgruppen-haltige Verbindungen.

Die Reaktivverdünner sind bevorzugt monofunktionelle Glycidylether, wie Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃- bis C₁₅-Alkylglycidylether, difunktionelle Glycidylether, wie Butandioldiglycidylether, Hexandioldiglycidylether, Trimethylolpropandiglycidylether oder Neopentylglykoldiglycidylether, trifunktionelle Glycidylether, wie Trimethylolpropantriglycidylether, oder aliphatische Polyole mit ein, zwei, drei oder mehr funktionellen Glycidylether-Gruppen. Geeignet sind auch epoxidiertes Sojaöl oder Leinöl, Acetoacetatgruppen aufweisende Verbindungen, insbesondere acetoacetylierte Polyole, Butyrolakton, sowie weiterhin Isocyanate und Reaktivgruppen aufweisende Silikone.

Erfindungsgemäß ist der Härter ein vorzugsweise ein Polyamin mit mindestens drei gegenüber Epoxidgruppen reaktiven Aminwasserstoffen.

Als Aminwasserstoffe werden Wasserstoffatome bezeichnet, die direkt an ein Amin-Stickstoffatom gebunden sind und mit Epoxidgruppen reagieren können. Bevorzugt enthält der Härter für das Epoxidharz mindestens zwei primäre oder sekundäre Aminogruppen pro Molekül. Aminverbindungen mit zwei oder mehr Aminogruppen pro Molekül werden nachfolgend als "Polyamine" bezeichnet. Bevorzugt sind Polyamine in solch einer Menge in der Epoxidharzzusammensetzung vorhanden, dass das molare Verhältnis von Aminwasserstoffen zu Epoxidgruppen im Bereich von 0.6 bis 1.5, insbesondere 0.8 bis 1.2, liegt.

Erfindungsgemäß können Gemische verschiedener Härter für das Epoxidharz eingesetzt werden, beispielsweise von zwei, drei oder mehr verschiedenen Härtern.

Als Härter für das Epoxidharz geeignete Polyamine sind insbesondere
- Aliphatische, cycloaliphatische oder arylaliphatische primäre Diamine, insbesondere Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, Bis-(4-aminocyclohexyl)methan, Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2(4)-Methyl-1,3-diaminocyclohexan, 1,3- oder 1,4-Bis-(aminomethyl)cyclohexan, 1,3-Cyclohexylenbis(methylamin), 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 1,4-Diamino-2,2,6-trimethylcyclohexan (TMCDA), 1,8-Menthandiamin, 3,9-Bis-(3-aminopropyl)-2,4,8,10-tetraoxa-spiro[5.5]undecan, 1,3-Bis(aminomethyl)benzol (MXDA) oder 1,4-Bis(aminomethyl)benzol;
- Ethergruppen-haltige aliphatische primäre Diamine, insbesondere Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxa-dodecan-3,10-diamin, 4,7,10-Trioxatridecan-1,13-diamin und höhere Oligomere dieser Diamine, Bis-(3-aminopropyl)polytetrahydrofuran und andere Polytetrahydrofuran-diamine mit Molekulargewichten im Bereich von beispielsweise 350 bis 2'000, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176, Polyetheramin D 230, Polyetheramin D 400 und Polyetheramin D 2000, PC Amine^{®} DA 250, PC Amine^{®} DA 400, PC Amine^{®} DA 650 und PC Amine^{®} DA 2000;
- sekundäre Aminogruppen aufweisende Polyamine, insbesondere Diethylentriamin (DETA), Triethylentetramin (TETA), Tetraethylenpentamin (TEPA), Pentaethylenhexamin (PEHA), höhere Homologe linearer Polyethylenamine, Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin oder Bis(6-aminohexyl)amin (BHMT), 3-(Dimethylamino)propylamin (DMAPA), 3-(3-(Dimethylamino)-propylamino)propylamin (DMAPAPA), N-alkylierte Polyetheramine, beispielsweise die Jeffamine^{®}-Typen SD-231, SD-401, SD-404 und SD-2001 (von Huntsman), N-Benzyl-1,2-ethandiamin, N-Benzyl-1,2-propandiamin, N-Benzyl-1,3-bis(aminomethyl)benzol, N-(2-Ethylhexyl)-1,3-bis(aminomethyl)benzol, N-(2-Phenylethyl)-1,3-bis(aminomethyl)benzol (Bestandteil von styrolisiertem 1,3-Bis(aminomethyl)benzol, erhältlich als Gaskamine^{®} 240 von Mitsubishi Gas Chemical), N-Benzyldiethylentriamin, N-Benzyltriethylentetramin, N-Benzyltetraethylenpentamin, N'-Benzyl-N-(3-aminopropyl)ethylendiamin oder N"-Benzyl-N,N'-bis(3-aminopropyl)-ethylendiamin;
- Amin/Polyepoxid-Addukte; insbesondere Addukte aus den genannten Polyaminen mit Diepoxiden im Molverhältnis von mindestens 2/1, insbesondere im Molverhältnis von 2/1 bis 10/1, oder mit Monoepoxiden;
- Polyamidoamine, welche Umsetzungsprodukte aus einer ein- oder mehrwertigen Carbonsäure, beziehungsweise deren Ester oder Anhydride, sind, insbesondere Umsetzungsprodukte aus einer Dimerfettsäure, und einem im stöchiometrischen Überschuss eingesetzten aliphatischen, cycloaliphatischen oder aromatischen Polyamin, insbesondere einem Polyalkylenamin wie beispielsweise DETA oder Triethylentetramin (TETA), darstellen, insbesondere die kommerziell erhältlichen Polyamidoamine Versamid^{®} 100, 125, 140 und 150 (von Cognis), Aradur^{®} 125, 140, 223, 250 und 848 (von Huntsman), Euretek^{®} 3607, Euretek^{®} 530 (von Huntsman), Beckopox^{®} EH 651, EH 654, EH 655, EH 661 und EH 663 (von Cytec);
- Polyethylenimine (PEI), dabei handelt es sich um verzweigte polymere Amine aus der Polymerisation von Ethylenimin. Ein geeignetes Polyethylenimin weist typischerweise ein mittleres Molekulargewicht im Bereich von 250 bis 25'000 g/mol auf und enthält tertiäre, sekundäre und primäre Aminogruppen. Polyethylenimine sind beispielsweise erhältlich unter dem Handelsnamen Lupasol^{®} (von BASF), zum Beispiel Lupasol^{®} WF, Lupasol^{®} FG, Lupasol^{®} G20 und Lupasol^{®} PR 8515.
- Mannich-Basen, insbesondere Phenalkamine, also Umsetzungsprodukte von Phenolen, insbesondere Cardanol, mit Aldehyden, insbesondere Formaldehyd, und Polyaminen.

Bevorzugt ist der Härter für das Epoxidharz ausgewählt aus der Gruppe bestehend aus TMD, 1,2-, 1,3- oder 1,4-Diaminocyclohexan, 1,3-Bis(aminomethyl)cyclohexan, 1,4-Bis(aminomethyl)cyclohexan, Bis(4-aminocyclohexyl)-methan, IPDA, 2(4)-Methyl-1,3-diaminocyclohexan, MXDA, DETA, TETA, TEPA, PEHA, N4-Amin, DMAPAPA, N-Benzyl-1,2-ethandiamin, Addukte dieser oder weiterer Polyamine mit Mono- oder Diepoxiden und Mannich-Basen.

Die Bindemittelzusammensetzung kann optional ein oder mehrere Additive enthalten, insbesondere nicht-reaktive Verdünner, Dispergiermittel, Entschäumer, Netzmittel, Konservierungsmittel, Beschleuniger, Verdicker, Pigmente, Polymerpulver, Fasern, Weichmacher oder Farbstoffe.

Als nicht-reaktive Verdünner geeignet, sind organisches Lösemittel oder höhersiedende Verdünner, insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, Cardanol (aus Cashewnussschalen-Öl, enthaltend als Hauptbestandteil 3-(8,11,14-Pentadecatrienyl)phenol), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Bevorzugt sind Verdünner mit einem Siedepunkt von mehr als 200°C. Bevorzugt ist der Verdünner ausgewählt aus der Gruppe bestehend aus Benzylalkohol, styrolisiertem Phenol, ethoxyliertem Phenol, phenolgruppenhaltigen aromatischen Kohlenwasserstoffharzen, insbesondere den Novares^{®}-Typen LS 500, LX 200, LA 300 oder LA 700 (von Rütgers), Diisopropylnaphthalin und Cardanol.

Besonders bevorzugt ist Benzylalkohol.

Phenolgruppen-haltige Verdünner zeigen auch eine Wirkung als Beschleuniger.

Als Beschleuniger geeignet, sind Verbindungen, welche die Reaktion von Epoxidgruppen und/oder Aminogruppen beschleunigen, insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; Nitrate wie insbesondere Calciumnitrat; tertiäre Amine wie insbesondere 1,4-Diaza-bicyclo[2.2.2]octan, Benzyldimethylamin, α-Methylbenzyldimethylamin, Triethanolamin, Dimethyl-aminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo-[5.4.0]undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen.

Als Beschleuniger bevorzugt sind Säuren, Nitrate, tertiäre Amine oder Mannich-Basen.

Besonders bevorzugt ist Salicylsäure, p-Toluolsulfonsäure, Calciumnitrat oder 2,4,6-Tris(dimethylaminomethyl)phenol oder eine Kombination davon.

Bevorzugt ist mindestens ein Netz- und/oder Dispergiermittel, insbesondere auf der Basis eines Polycarboxylatethers, in der Bindemittelzusammensetzung vorhanden. Dies ermöglicht eine bessere Verarbeitbarkeit, insbesondere gute Fliessfähigkeit, und einen hohen Anteil an Füllstoffen, was vorteilhaft für eine gute Homogenität und Festigkeit der ausgehärteten Bindemittelzusammensetzung ist.

Unter Polycarboxylatether wird in diesem Dokument ein Kammpolymer verstanden, bei dem sowohl anionische Gruppen als auch Polyalkylenglycol-Seitenketten kovalent an das Polymerrückgrat gebunden sind. Solche Polymere sind als Verflüssiger für mineralische Bindemittel wie Zement und Gips bekannt.

Bevorzugte Polycarboxylatether umfassen Struktureinheiten der Formel I und Struktureinheiten der Formel II, 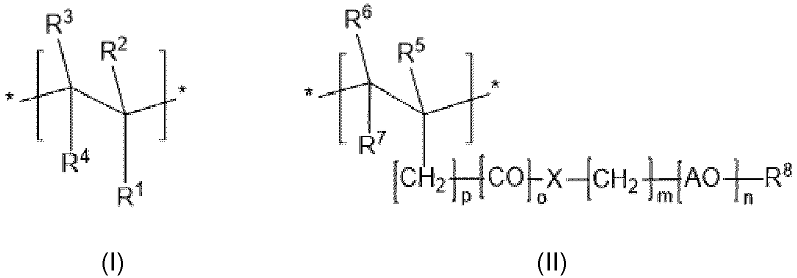 wobei
R¹, jeweils unabhängig voneinander -COOM, -SO₂-OM, -O-PO(OM)₂ und/oder -PO(OM)₂, bevorzugt -COOM, ist,
R² und R⁵, jeweils unabhängig voneinander H, -CH₂-COOM oder eine Alkylgruppe mit 1 bis 5 Kohlenstoffatomen, bevorzugt H oder -CH₃, sind,
R³ und R⁶, jeweils unabhängig voneinander H oder eine Alkylgruppe mit 1 bis 5 Kohlenstoffatomen, bevorzugt H, sind,
R⁴ und R⁷, jeweils unabhängig voneinander H, -COOM oder eine Alkylgruppe mit 1 bis 5 Kohlenstoffatomen, bevorzugt H, sind,
oder R¹ und R⁴ einen Ring zu -CO-O-CO- (Anhydrid) formen,
M, jeweils unabhängig voneinander H⁺, ein Alkalimetallion, ein Erdalkalimetallion, ein di- oder trivalentes Metallion, eine Ammoniumgruppe oder ein organisches Ammonium, bevorzugt ein H⁺ oder ein Alkalimetallion, ist,
p = 0, 1 or 2,
o = 0 or 1,
m = 0, oder eine ganze Zahl von 1 bis 4,
n = 2 - 250, insbesondere 10 - 200,
X, jeweils unabhängig voneinander -O- oder -NH- ist,
R⁸, jeweils unabhängig voneinander H, eine C₁- bis C₂₀-Alkylgruppe, - Cyclohexylgruppe oder -Alkylarylgruppe ist, und
A = C₂- bis C₄-Alkylen, bevorzugt Ethylen.

Bevorzugt ist das molare Verhältnis von Struktureinheit I zu Struktureinheit II 0.7 - 10 : 1, mehr bevorzugt 1 - 8 : 1, insbesondere 1.5 - 5 : 1.

Es kann auch vorteilhaft sein, wenn der Polycarboxylatether weiter noch eine Struktureinheit III umfasst. Bevorzugt ist Struktureinheit III abgeleitet von Monomeren ausgewählt aus der Gruppe bestehend aus Alkyl- oder Hydroxyalkylestern der Acrylsäure- oder Methacrylsäure, Vinylacetat, Styrol und N-Vinylpyrrolidon.

Bevorzugt enthält der Polycarboxylatether Carbonsäuregruppen und/oder deren Salze und Polyethylenglykol-Seitenketten.

Bevorzugt ist der Polycarboxylatether aus Struktureinheiten I, die abgeleitet von ethylenisch ungesättigten Carbonsäuren, insbesondere ungesättigten Monocarbonsäuren, oder deren Salzen sind, und Struktureinheiten II, die abgeleitet von ethylenisch ungesättigten Polyalkylenglykolen, insbesondere Polyethylenglykolen, sind, aufgebaut. Insbesondere enthält der Polycarboxylatether ausser Struktureinheiten I und Struktureinheiten II keine weiteren Struktureinheiten.

Bevorzugt ist die Bindemittelzusammensetzung frei von Organosilanen. Insbesondere enthält die Bindemittelzusamensetzung keine Organosilane ausgewählt aus der Gruppe bestehend aus Glycidoxypropyltrimethoxysilan, Glycidoxypropyltriethoxysilan, Glycidoxypropylmethyldiethoxysilan, Glycidoxypropylmethyldimethoxysilan, 2-(3,4-epoxycyclohexyl)ethyltrimethoxysilan, aminopropyltrimethoxysilan, aminopropyltriethoxysilan, aminoethyl-aminopropyltrimethoxysilan, aminoethylaminopropyltriethoxysilan, aminoethyl-aminopropylmethyldimethoxysilan, aminoethyl-aminopropylmethyldiethoxysilan, phenylaminopropyltrimethoxysilan, aminopropyl- aminopropylmethyldimethoxysilan, aminopropyl- aminopropylmethyldiethoxysilan.

Bevorzugt ist die Schlacke und gegebenenfalls auch der mindestens eine weitere Füllstoff, falls vorhanden, mit dem Netz- und/oder Dispergiermittel beschichtet. Die Beschichtung kann hierbei durch einfaches Aufsprühen, entweder eines flüssigen Netz- und/oder Dispergiermittels oder einer Lösung eines flüssigen oder festen Netz- und/oder Dispergiermittels in einem geeigneten Lösungsmittel, erfolgen.

Die erfindungsgemäße Bindemittelzusammensetzung umfassend mindestens ein Epoxidharz und mindestens ein Polyamin enthält:
- 8 bis 16 Gewichts-% Epoxidharze,
- 1 bis 5 Gewichts-% Polyamine,
- 83 bis 90 Gewichts-%, bevorzugt 85 bis 88 Gewichts-%, Schlacke, insbesondere mit einer Partikelgrösse von maximal 16 mm, bevorzugt maximal 8 mm, im Speziellen maximal 4 mm, oder maximal 3.5 mm, und
- 0 bis 8 Gewichts-%, bevorzugt 0.01 bis 5 Gewichts-%, weitere Additive, bezogen auf 100 Gewichts-% Bindemittelzusammensetzung.

Bevorzugt liegt die Bindemittelzusammensetzung vor ihrer Verwendung als Mehrkomponentensystem vor, insbesondere als System mit zwei oder drei Komponenten. Bevorzugt liegen die Bestandteile, die miteinander in einer Härtungsreaktion reagieren können, in getrennt voneinander gelagerten Behältnissen vor. In dieser Form kann die Bindemittelzusammensetzung über einen Zeitraum von mehreren Monaten bis zu einem Jahr und länger gelagert werden, ohne dass sich ihre Eigenschaften in einem für ihren Gebrauch relevanten Ausmass verändern. Erst bei der Anwendung der Bindemittelzusammensetzung werden die reaktiven Komponenten des organischen Bindemittels miteinander vermischt, worauf die Aushärtung der Bindemittelzusammensetzung beginnt.

Ebenfalls offenbart, aber nicht gemäß der Erfindung ist ein Mehrkomponentensystem zur Herstellung einer aushärtbaren Bindemittelzusammensetzung umfassend mindestens eine Harz-Komponente, umfassend mindestens ein Epoxidharz, und mindestens eine Härter-Komponente, umfassend mindestens einen Härter für Epoxidharze, wobei Schlacke und optional weitere Inhaltsstoffe in der Harz-Komponenten, der Härter-Komponenten und/oder einer gegebenenfalls vorhandenen weiteren Komponenten, insbesondere einer Feststoff-Komponenten, vorhanden sind. Die Feststoff-Komponente wird auch als Füllstoffkomponente bezeichnet. Sie ist typischerweise von pulverförmiger, rieselfähiger Konsistenz, während die Bindemittel-Komponenten bei 23°C typischerweise eine flüssige, gegebenenfalls pastöse, Konsistenz aufweisen. Bevorzugt liegt das Gewichts-Verhältnis der Harz-Komponente zur Härter-Komponente im Bereich von 8:1 bis 2:1, mehr bevorzugt bei 6:1 bis 3:1. Bevorzugt liegt das Gewichts-Verhältnis von Harz-Komponente plus Härter-Komponente zur Feststoff-Komponente bei 1:3 bis 1:12, insbesondere bei 1:4 bis 1:10.

Die Harz-Komponente kann zusätzlich kompatible Additive enthalten, insbesondere Reaktivverdünner, Lösungsmittel und/oder nicht-reaktive Verdünner. Solche Zusätze werden üblicherweise eingesetzt, um die Viskosität zu erniedrigen und somit die Verarbeitbarkeit zu verbessern.

Die Härter-Komponente kann erfindungsgemäß grossmehrheitlich aus einem oder einer Mischung verschiedener Härter bestehen, oder sie kann zusätzlich weitere geeignete und kompatible Additive, wie Beschleuniger oder nicht-reaktive Verdünner enthalten.

Ein weiterer Gegenstand der Erfindung ist die Verwendung der Bindemittelzusammensetzung zum Verkleben Beschichten oder Abdichten von Substraten, zum Verfüllen von Kanten, Löchern oder Fugen, als Verankerung- oder Injektionsharz, als Untergiess- oder Vergussmasse, als Bodenbelag und/oder zur Herstellung von Formkörpern.

Ein weiterer Gegenstand der Erfindung ist die Verwendung der erfindungsgemässen Bindemittelzusammensetzung für die Herstellung von Materialien, mit bei 20°C verbesserter elektrischer Leitfähigkeit, dadurch gekennzeichnet, dass die Schlacke in der Bindemittelzusammensetzung eine eisenhaltige Schlacke mit mindestens 8 Gewichts-% Eisen, gerechnet als FeO, bezogen auf das Gesamtgewicht der Schlacke, und eine Schlacke mit einer Rohdichte von mindestens 3.1 kg/l, ist.

Überraschenderweise zeigt eine solche ausgehärtete Bindemittelzusammensetzung eine verbesserte elektrische Leitfähigkeit im Vergleich zu einer ausgehärteten Bindemittelzusammensetzung die anstelle der eisenhaltigen Schlacke die gleiche Gewichtsmenge an Quarzsand mit gleicher Sieblinie enthält.

Das Material mit verbesserter elektrischer Leitfähigkeit weist bevorzugt einen um mindestens einen Faktor von 2, mehr bevorzugt mindestens 2.5, insbesondere mindestens 3.0, verringerten spezifischen elektrischen Durchgangswiderstand auf, im Vergleich zu einem ansonsten identischen Material, das aber anstatt der eisenhaltigen Schlacke Quarzsand von gleicher Partikelgrösse enthält. Der elektrische Durchgangswiderstand wird zwischen den zwei gegenüber liegenden 40 × 40 mm Flächen eines Prismas von 40 × 40 × 160 mm durch Anlegen einer Spannung von 100 mV und einer Frequenz von 1 kHz, bei 20°C, bestimmt, wobei die Messung nach 7 Tagen Lagerung bei 20°C, durchgeführt wird.

Besonders vorteilhaft für das Untergiessen von Maschinen sind aushärtbare Bindemittelzusammensetzungen, die Schlacken mit einer Rohdichte von mindestens 2.9 kg/l, insbesondere mindestens 3.1 kg/l, bevorzugt mindestens 3.3 kg/l, im Speziellen mindestens 3.5 kg/l, umfassen. Dadurch kann ein speziell guter Verbund zwischen der ausgehärteten Bindemittelzusammensetzung und der darüber liegenden Maschine oder Turbine, welche untergossen wurde, sowie eine gute Druckfestigkeit des untergossenen Materials erhalten werden.

Die Verwendung des Mehrkomponentensystems erfolgt, indem die Komponenten vermischt werden. Es werden hierbei vorteilhaft zuerst die mindestens zwei Komponenten, umfassend die Bestandteile des organischen Bindemittels, gut gemischt und anschliessend die Komponente, umfassend die Schlacke, falls eine solche separate Komponente vorhanden ist, gut eingemischt. Dabei können auch weitere Komponenten oder Zusatzmittel hinzugefügt werden. Nach der Vermischung aller Komponenten erfolgt die Aushärtung. Solche Verarbeitung ist dem Fachmann bekannt. Überraschenderweise lässt sich die frisch gemischte aushärtbare Bindemittelzusammensetzung trotz des hohen Anteils an Schlacke bei Umgebungstemperaturen sehr gut und homogen verarbeiten.

Es kann auch vorteilhaft sein, insbesondere für die Verwendung der erfindungsgemässen Bindemittelzusammensetzung als Ausgleichsmörtel, Estrich oder Bodenbeschichtung, wenn eine erfindungsgemässe Bindemittelzusammensetzung in folgenden Schritten gemischt und appliziert wird:
- Vermischen aller Komponenten der Bindemittelzusammensetzung, ausser den Füllstoffen mit einer Partikelgrösse von mehr als 0.06 mm, mit geeigneten Mischgeräten,
- Applizieren der Mischung als Ausgleichsmörtel, Estrich oder Bodenbeschichtung, und
- Einstreuen der Füllstoffe mit einer Partikelgrösse von mehr als 0.06 mm, wobei mindestens 20 Gewichts-% dieser Füllstoffe eisenhaltige Schlacke sind, von Hand oder mit einer geeigneten Vorrichtung.

Ein weiterer Gegenstand der Erfindung ist eine ausgehärtete Bindemittelzusammensetzung, erhalten durch Aushärten der erfindungsgemässen aushärtbaren Bindemittelzusammensetzung oder durch Vermischen der Komponenten und Aushärten des erfindungsgemässen Mehrkomponentensystems.

Die Aushärtung erfolgt bevorzugt bei Umgebungstemperaturen, insbesondere bei einer Temperatur im Bereich von 5 bis 40°C, bevorzugt 7 bis 35°C.

Die Bindemittelzusammensetzung ist ausgehärtet, wenn keine wesentlichen Reaktionen mehr zwischen Epoxidgruppen und dem Härter stattfinden. Die ausgehärtete Bindemittelzusammensetzung weist eine feste Konsistenz auf. Sie kann insbesondere in Form eines dreidimensionalen Gegenstandes oder Bauteils, oder als Beschichtung, Haftbrücke, Spachtelmasse, Bestandteil eines Laminats, Klebstoff, Füllung oder Dichtung vorliegen.

Bevorzugt sind die Schlacke und der Füllstoff, falls vorhanden, gleichmäßig oder im Wesentlichen gleichmäßig in der ausgehärteten Bindemittelzusammensetzung verteilt.

Es kann aber auch vorteilhaft sein, insbesondere für Unterfüllungen, beispielsweise von Maschinen und Turbinen, wenn die Konzentration an Schlacke in der obersten Schicht der horizontalen Oberfläche der ausgehärteten Bindemittelzusammensetzung kleiner als in der restlichen ausgehärteten Bindemittelzusammensetzung, insbesondere unter 10 Gewichts-%, ist. Dies kann den Verbund zwischen der Bindemittelzusammensetzung und dem zu unterfüllenden Objekt verbessern.

### Kurze Beschreibung der Figuren

- Fig. 1 zeigt:: eine schematische Darstellung von beispielhaften Querschnitten von Schlackepartikeln mit unregelmässiger Form.

### Beispiele

Im Folgenden sind Ausführungsbeispiele aufgeführt, von denen Beispiele 16 und 22 erfindungsgemäss sind.
"Bsp.": steht für "Beispiel"
"Ref.": steht für "Referenz-Beispiel"

### Verwendete Materialien

Der Quarzsand und die Schlacken wurden vor der Verwendung getrocknet und durch Sieben in Kornfraktionen aufgeteilt. Die Kornfraktionen wurden anschliessend so gemischt, dass die Korngrössenverteilung der verwendeten Sande einer vorgegebenen Korngrössenverteilung (Sieblinie) entsprach.

EOS ist eine Elektroofenschlacke von Stahl Gerlafingen, Schweiz. Das eingesetzte Material hatte eine Rohdichte von etwa 3.3 kg/l und einen Gehalt an Eisen, gerechnet als FeO, von etwa 19 Gewichts-%.

HOS ist eine Hochofenstückschlacke der Hüttenwerke Krupp Mannesmann, Deutschland, erhältlich von der Firma Hermann Rauen GmbH & Co., Deutschland. Das eingesetzte Material hatte eine Rohdichte von 2.9 kg/l und einen Gehalt an Eisen, gerechnet als FeO, von etwa 3 Gewichts-%.

Raulit^{®} ist eine Hochofenschlacke der DK-Recycling und Roheisen GmbH, Deutschland, erhältlich unter dem Markennamen Raulit^{®}-Mineralbaustoffgemisch von der Firma Hermann Rauen GmbH & Co., Deutschland. Das eingesetzte Material hatte eine Rohdichte von etwa 2.9 kg/l und einen Gehalt an Eisen, gerechnet als FeO, von etwa 1 Gewichts-%.

HS ist ein Hüttensand von voestalpine AG, Österreich. Das eingesetzte Material hatte eine Rohdichte von etwa 2.9 kg/l und einen Gehalt an Eisen, gerechnet als FeO, von unter 1 Gewichts-%.

CS ist NAstra^{®} Eisensilikat Granulat, eine glasige Kupferschlacke, erhältlich von Sibelco, Deutschland, mit einer Rohdichte von etwa 3.7 kg/l und einem Gehalt an Eisen, gerechnet als FeO, von etwa 51 Gewichts-%.

Sikadur^{®}-42 HE ist ein dreikomponentiger Vergussmörtel auf Epoxidharzbasis, erhältlich von Sika Schweiz AG.

Der Polycarboxylatether (PCE) war ein Kammpolymer mit Carbonsäuregruppen und Polyethylenglykol-Seitenketten.

### Messmethoden

Die **Druckfestigkeit** und die **Biegezugfestigkeit** wurden an 40 × 40 × 160 mm Prüfkörpern mit Prüfmaschinen gemäss DIN EN 196-1 bestimmt.

Zur Bestimmung des **spezifischen elektrischen Durchgangswiderstandes** wurden die gegenüber liegenden 40 × 40 mm Flächen der 40 × 40 × 160 mm-Prüfkörper mit elektrisch leitfähigem Gel bestrichen und an beide Flächen eine Stahlelektrode, die die ganze Fläche bedeckt, bündig angelegt. Der elektrische Durchgangswiderstand der Prüfkörper wurde durch Anlegen einer Spannung von 100 mV AC bei einer Frequenz von 1 kHz und 10 kHz an die beiden Elektroden bestimmt.

Die **thermische Leitfähigkeit** wurde gemäss ASTM D5470-06 mit dem ZFW TIM-Tester der Firma ZFW (Zentrum für Wärmemanagement) Stuttgart, Deutschland, an Prüfkörpern von 30 mm Durchmesser und 2 mm Höhe bestimmt.

### Herstellung der Prüfkörper

Sikadur^{®}-42 HE Komponente A (enthaltend das Epoxidharz; 99.9 Gewichts-% Harzanteil) wurde mit der zugehörigen Komponente B (enthaltend den Härter; 70 Gew.-% Härteranteil) im Gewichtsverhältnis 3:1 gut gemischt und anschliessend eine selbst hergestellte Feststoff-Komponente gemäss Tabelle 1 zugegeben und gut eingemischt. Das Gewichts-Verhältnis von Komponente A zu Komponente B zu Feststoff-Komponente betrug 3:1:34.

Zur Herstellung der Prüfkörper wurde der angemischte Vergussmörtel in Stahlformen gegossen und in der Schalung für 24 Stunden bei 20 °C gelagert. Danach wurden die Prüfkörper aus der Schalung genommen und bei 20 °C weiter gelagert. Nach 7 Tagen Lagerung wurden der spezifische elektrische Widerstand, die Festigkeit und die thermische Leitfähigkeit bestimmt.

**Tabelle 1: Zusammensetzung der Feststoff-Komponente**

| **Bestandteil** | **Gewichts-%** |
|---|---|
| Mischung aus Kalkstein- und Schwerspatmehl, < 0.1 mm | 24.9 |
| Sand (Schlackesand oder Quarzsand)*, 0.12-3.2 mm | 74.6 |
| Polycarboxylatether-Lösung (20 Gewichts-% Polycarboxylatether gelöst in 80 Gewichts-% Benzylalkohol) | 0.5 |

| | |
|---|---|
| * Sand-Typ siehe bei dem Referenz-Beispiel und den Beispielen. | |

Für die Herstellung der Feststoff-Komponente wurden die festen Bestandteile trocken gemischt und während des Mischens die Polycarboxylatether-Lösung aufgesprüht.

### Festigkeit und elektrischer Durchgangswiderstand von Verqussmörteln auf Basis von Epoxidharz

Der Typ Sand der für die Epoxidharzzusammensetzungen M-1 bis M-7 verwendet wurde, sowie deren Eigenschaften im flüssigen und im ausgehärteten Zustand sind in Tabelle 2 angegeben.

**Tabelle 2**

| | **Ref. 1** | **Bsp. 1** | **Bsp. 2** | **Bsp. 3** | **Bsp. 4** | **Bsp. 5** | **Bsp. 6** |
|---|---|---|---|---|---|---|---|
| | M-1 | M-2 | M-3 | M-4 | M-5 | M-6 | M-7 |
| Sand | Quarzsand | EOS¹⁾ | EOS | HOS-kristallin | Raulit^{®} | HS | CS |
| Konsistenz nach dem Mischen | flüssig²⁾ | zäh³⁾ | flüssig | flüssig | flüssig | flüssig | flüssig |
| Druckfestigkeit [MPa] | 103.9 | 131.1 | 120.3 | 117.2 | 116.3 | 113.2 | 115.9 |
| Biegezugfestigkeit [MPa] | 26.3 | 33.4 | 29.9 | 26.8 | 28.2 | 27.0 | 31.2 |
| Spezifischer elektrischer Durchgangswiderstand [MΩ·cm] bei 1 kHz | 175 | nv⁴⁾ | 40 | 121 | 137 | 187 | 27 |
| Faktor⁵⁾ 1 kHz | | | 4.4 | 1.4 | 1.3 | 0.9 | 6.5 |
| Spezifischer elektrischer Durchgangswiderstand [MΩ·cm] bei 10 kHz | 17 | nv | 5.2 | 12 | 14 | 21 | 3.1 |
| Faktor 10 kHz | | | 3.3 | 1.4 | 1.2 | 0.8 | 5.5 |

| | | | | | | | |
|---|---|---|---|---|---|---|---|
| ¹⁾ ohne Zugabe einer Polycarboxylatether-Lösung zur Feststoff-Komponente ²⁾ flüssig: selbst verfliessend, konnte in die Form gegossen werden ³⁾ zäh: Mörtel war nicht selbstfliessend, die Form musste stark vibriert werden um einen homogenen Prüfkörper zu erhalten ⁴⁾ nv: kein Messwert vorhanden ⁵⁾ Faktor um den der spezifische elektrische Durchgangswiderstand eines Mörtels M-2 bis M-7 im Vergleich zu dem spezifischen elektrischen Durchgangswiderstand des Referenzmörtels M1 reduziert ist, z.B. Widerstand M1/Widerstand M2 | | | | | | | |

### Thermische Leitfähigkeit eines erfindungsgemässen Vergussmörtels M-8

### Beispiel 7

Sikadur^{®}-42 HE Komponente A (Harzkomponente auf Basis Epoxidharz; 99.9 Gewichts-% Harzanteil) wurde mit der zugehörigen Komponente B (Härterkomponente auf Basis Aminhärter; 70 Gewichts-% Härteranteil) im Gewichtsverhältnis 3:1 gut gemischt. Anschliessend wurden in 40 g dieser Epoxymischung eine Feststoff-Komponente, bestehend aus:
- 252 g EOS-Sand mit einer Partikelgrösse von 0.12-0.32 mm,
- 86 g einer Mischung aus Kalksteinmehl und Schwerspatmehl mit einer Partikelgrösse von unter 0.1 mm und
- 1.4 g handelsübliches Netzmittel
gut eingemischt.

Es wurde ein Prüfkörper mit 30 mm Durchmesser und 2 mm Höhe durch Giessen in entsprechende Formen hergestellt und 7 Tage bei 20°C aushärten gelassen.

Die thermische Leitfähigkeit der Probe betrug 2.06 W/(m·K). Dies ist deutlich höher als die thermische Leitfähigkeit eines kommerziellen Epoxidharzes mit typischerweise 0.20 W/(m·K).

### Vergussmörtel auf Basis von Epoxidharz mit unterschiedlicher Menge an

### Kupferschlacke

Sikadur^{®}-42 HE Komponente A (enthaltend das Epoxidharz; 99.9 Gewichts-% Harzanteil) wurde mit der zugehörigen Komponente B (enthaltend den Härter; 70 Gewichts-% Härteranteil) im Gewichtsverhältnis 3:1 gut gemischt und anschliessend eine selbst hergestellte Feststoff-Komponente mit einer Zusammensetzung, wie in Tabelle 1 angegeben, zugegeben und gut eingemischt. Das Sand 0.12-3.2 mm in dieser Messserie war CS-Sand (Kupferschlacke). Das Gewichts-Verhältnis von Komponente A zu Komponente B zu Feststoff-Komponente ist in Tabelle 3 angegeben. Der angemischte Vergussmörtel wurde jeweils in Formen von 13 × 13 × 25 mm (Breite, Höhe, Länge) gegossen, auf einem Rütteltisch 1 Minute gerüttelt und in der Schalung für 24 Stunden bei 20 °C gelagert. Nach dem Ausschalen wurde eine, mit freiem Auge beurteilte, praktisch schlackefreie Epoxidharzschicht an der Oberseite der Prüfkörper festgestellt und deren Dicke bestimmt. Die Dicke dieser Schicht sowie der Gehalt an Füllstoffen und Schlacke in den Vergussmörteln sind in Tabelle 3 angegeben.

**Tabelle 3**

| | **Bsp. 8** | **Bsp. 9** | **Bsp. 10** | **Bsp. 11** | **Bsp. 12** |
|---|---|---|---|---|---|
| | M-9 | M-10 | M-11 | M-12 | M-13 |
| | Gewichtsteile in dem Vergussmörtel | | | | |
| Komponente A | 3 | 3 | 3 | 3 | 3 |
| Komponente B | 1 | 1 | 1 | 1 | 1 |
| Feststoff-Komponente | 16 | 30 | 34 | 38 | 46 |

| Gewichts-% Feststoff-Komponente in dem Vergussmörtel | | | | | |
|---|---|---|---|---|---|
| | 80 | 88 | 89 | 90 | 92 |

| Gewichts-% Schlacke in dem Vergussmörtel | | | | | |
|---|---|---|---|---|---|
| | 59 | 65 | 66 | 67 | 68 |

| Dicke der schlackefreien Epoxidharzschicht an der Oberseite des Prüfkörpers (in % von der Gesamthöhe des Prüfkörpers) | | | | | |
|---|---|---|---|---|---|
| | 28 | 15 | 11 | 5 | 3 |

### Druckfestigkeit von Veraussmörteln mit unterschiedlichen Anteilen an Epoxidharz und Härter

Epoxidharz (hergestellt aus 60 Massenteile Araldit GY 250, 20 Massenteile F-Harz, 15 Massenteile 1,4-Butandiglycidylether, 5 Massenteile C12/C14-Alkylglycidylether) wurde mit dem Härter (hergestellt aus 55 Massenteile Triethylentetramin, 10 Massenteile Polyaminoamid-Addukt - mit 115 g/Eq H-aktiv Äquivalenten und ca. 270 mg KOH/g Aminzahl - und 5 Massenteile Tris-2,4,6-dimethylaminomethylphenol) in den in Tabellen 4 und 5 angegebenen Mengen gut gemischt. Anschliessend wurde EOS und PCE in den Mengen gemäss Tabellen 4 und 5 zugegeben und gut eingemischt.

Zur Herstellung der Prüfkörper wurde der angemischte Vergussmörtel in Stahlformen gegossen. Die Fliessfähigkeit wurde dabei auf einer Skala von 1 bis 5 beurteilt, wobei 1 nicht fliessfähig bedeutet und 5 hervorragend fliessfähig bedeutet. In der Schalung wurde für 24 Stunden bei 20 °C gelagert. Danach wurden die Prüfkörper aus der Schalung genommen und bei 20 °C weiter gelagert. Nach 7 Tagen Lagerung wurden die Druckfestigkeit bestimmt.

**Tabelle 4**

| | Bsp 13 | Bsp 14 | Bsp 15 | Bsp 16 | Bsp 17 | Bsp 18 |
|---|---|---|---|---|---|---|
| | M-14 | M-15 | M-16 | M-17 | M-18 | M-19 |
| EOS 0.12-3.2 mm | 29.88 | 29.88 | 29.88 | 29.88 | 29.88 | 29.88 |
| PCE-Lösung* | 0.12 | 0.12 | 0.12 | 0.12 | 0.12 | 0.12 |
| Epoxid-Harz | 1.18 | 1.82 | 5.61 | 2.86 | 7.48 | 10.24 |
| Härter | 0.27 | 0.42 | 1.31 | 0.66 | 1.74 | 2.38 |
| Fliessfähigkeit | 1 | 1 | 4 | 2 | 5 | 5 |
| Druckfestigkeit [MPa] | 7.15 | 19.9 | 87.1 | 31.2 | 87.7 | 85.4 |

| | | | | | | |
|---|---|---|---|---|---|---|
| *20 Gewichts-% Polycarboxylatether gelöst in 80 Gewichts-% Benzylalkohol | | | | | | |

**Tabelle 5**

| | Bsp 19 | Bsp 20 | Bsp 21 | Bsp 22 | Bsp 23 | Ref 24 |
|---|---|---|---|---|---|---|
| | M-20 | M-21 | M-22 | M-23 | M-24 | M-25 |
| CS 0.12-3.2 mm | 29.88 | 29.88 | 29.88 | 29.88 | 29.88 | 29.88 |
| PCE-Lösung* | 0.12 | 0.12 | 0.12 | 0.12 | 0.12 | 0.12 |
| Epoxid Harz | 1.18 | 1.82 | 5.61 | 2.86 | 7.48 | 10.24 |
| Härter | 0.27 | 0.42 | 1.31 | 0.66 | 1.74 | 2.38 |
| Fliessfähigkeit | 1 | 1 | 5 | 2 | 5 | 5 |
| Druckfestigkeit [MPa] | 25.2 | 44.2 | 75.4 | 66.6 | 69.8 | 64.6 |

| | | | | | | |
|---|---|---|---|---|---|---|
| *20 Gewichts-% Polycarboxylatether gelöst in 80 Gewichts-% Benzylalkohol | | | | | | |

### Druckfestigkeit von Vergussmörteln mit unterschiedlichen Anteilen an Polyurethan-Harz

Polyurethanharz (PUR; hergestellt durch Vermischen von 55 Massenteilen Setathane 1150, 3.5 Massenteilen Desmophen T 4011, 17.3 Massenteilen Hydroxy-terminiertes Polybutadien-Polyol, 13.8 Massenteilen Ethyl-1,3-hexandiol, 10 Massenteilen Sylosiv A3, 0.1 Massenteilen Zr-Katalysator K-Kat A-209) wurde mit Desmodur VL in den in Tabellen 6 und 7 angegebenen Mengen gut gemischt. Anschliessend wurde EOS, die Mischung aus Kalkstein und Schwerspat (s. Tabelle 1) und PCE in den Mengen gemäss Tabellen 6 und 7 zugegeben und gut eingemischt.

Zur Herstellung der Prüfkörper wurde der angemischte Vergussmörtel in Stahlformen gegossen. Die Fliessfähigkeit wurde dabei auf einer Skala von 1 bis 5 beurteilt, wobei 1 nicht fliessfähig bedeutet und 5 hervorragend fliessfähig bedeutet. In der Schalung wurde für 24 Stunden bei 20 °C gelagert. Danach wurden die Prüfkörper aus der Schalung genommen und bei 20 °C weiter gelagert. Nach 7 Tagen Lagerung wurden die Druckfestigkeit bestimmt.

**Tabelle 6**

| | Bsp 25 | Bsp 26 | Bsp 27 | Bsp 28 |
|---|---|---|---|---|
| | M-26 | M-27 | M-28 | M-29 |
| EOS 0.12-3.2 mm | 25.4 | 25.05 | 25.05 | 25.72 |
| Mischung aus Kalkstein- und Schwerspatmehl, < 0.1 mm | 4.48 | 4.83 | 4.83 | 4.16 |
| PCE-Lösung* | 0.12 | 0.12 | 0.12 | 0.12 |
| PUR | 1.16 | 4.57 | 0.62 | 2.60 |
| Desmodur VL | 0.74 | 2.92 | 0.40 | 1.66 |
| Fliessfähigkeit | 1 | 3 | 2 | 2 |
| Druckfestigkeit [MPa] | 18.3 | 31.9 | 38.3 | 33.8 |

| | | | | |
|---|---|---|---|---|
| *20 Gewichts-% Polycarboxylatether gelöst in 80 Gewichts-% Benzylalkohol | | | | |

**Tabelle 7**

| | Bsp 29 | Bsp 30 | Bsp 31 | Bsp 32 |
|---|---|---|---|---|
| | M-26 | M-27 | M-28 | M-29 |
| CS 0.12-3.2 mm | 25.4 | 25.05 | 25.05 | 25.72 |
| Mischung aus Kalkstein- und Schwerspatmehl, < 0.1 mm | 4.48 | 4.83 | 4.83 | 4.16 |
| PCE-Lösung* | 0.12 | 0.12 | 0.12 | 0.12 |
| PUR | 1.16 | 4.57 | 0.62 | 2.60 |
| Desmodur VL | 0.74 | 2.92 | 0.40 | 1.66 |
| Fliessfähigkeit | 1 | 2 | 1 | 1 |
| Druckfestigkeit [MPa] | 36.6 | 40.7 | 42.1 | 55.0 |

| | | | | |
|---|---|---|---|---|
| *20 Gewichts-% Polycarboxylatether gelöst in 80 Gewichts-% Benzylalkohol | | | | |

## Patentansprüche

1. Aushärtbare Bindemittelzusammensetzung, umfassend mindestens ein Epoxidharz und mindestens ein Polyamin, enthaltend:
- 8 bis 16 Gewichts-% Epoxidharze,
- 1 bis 5 Gewichts-% Polyamine,
- 83 bis 90 Gewichts-% Schlacke, wobei die Schlacke eine eisenhaltige Schlacke mit mindestens 8 Gewichts-% Eisen, gerechnet als FeO, ist, und die Schlacke eine Rohdichte von mindestens 2.9 kg/l aufweist
- 0 bis 8 Gewichts-%, bevorzugt 0.01 bis 5 Gewichts-%, weitere Additive,
bezogen auf 100 Gewichts-% Bindemittelzusammensetzung.

2. Bindemittelzusammensetzung gemäss Anspruch 1, **dadurch gekennzeichnet, dass** die Bindemittelzusammensetzung 85 bis 88 Gewichts-% Schlacke, bezogen auf 100 Gewichts-% Bindemittelzusammensetzung, enthält.

3. Bindemittelzusammensetzung gemäss einem der vorhergehenden Ansprüche, **dadurch gekennzeichnet, dass** die Schlacke ausgewählt ist aus der Gruppe bestehend aus Hochofenschlacken, insbesondere Hochofenstückschlacken und Hüttensande, Stahlschlacken, Metallhüttenschlacken, insbesondere Kupferschlacken, und Schlacken aus der Abfallverbrennung, wobei Hochofenschlacken, Stahlschlacken und Metallhüttenschlacken bevorzugt sind.

4. Bindemittelzusammensetzung gemäss einem der vorhergehenden Ansprüche, **dadurch gekennzeichnet, dass** die Schlacke eine eisenhaltige Schlacke mit mindestens 10 Gewichts-%, bevorzugt mindestens 15 Gewichts-%, 20 Gewichts-%, oder 25 Gewichts-%, Eisen, gerechnet als FeO, ist.

5. Bindemittelzusammensetzung gemäss einem der vorhergehenden Ansprüche, **dadurch gekennzeichnet, dass** die Schlacke eine Rohdichte von mindestens 3.1 kg/l, insbesondere mindestens 3.3 kg/l, im Speziellen mindestens 3.5 kg/l, aufweist.

6. Bindemittelzusammensetzung gemäss einem der vorhergehenden Ansprüche, **dadurch gekennzeichnet, dass** die Schlacke eine Partikelgrösse von 0.05 bis 16 mm, bevorzugt 0.06 bis 8 mm, mehr bevorzugt 0.1 bis 4 mm, im Speziellen 0.12 bis 3.5 mm, aufweist.

7. Bindemittelzusammensetzung gemäss einem der vorhergehenden Ansprüche, **dadurch gekennzeichnet, dass** die Schlackepartikel eine konische, polygonale, kubische, fünfeckige, sechseckige, achteckige, prismatische und/oder polyedrische Form aufweisen.

8. Bindemittelzusammensetzung gemäss einem der vorhergehenden Ansprüche, **dadurch gekennzeichnet, dass** zusätzlich noch mindestens ein weiterer mineralischer Füllstoff, ausgewählt aus der Gruppe bestehend aus Kalksteinmehl, Kreide, Quarzmehl, Silicastaub, Titandioxid, Schwerspatmehl und Aluminiumoxid, bevorzugt mit einer Partikelgrösse von maximal 0.1 mm, vorhanden ist.

9. Bindemittelzusammensetzung gemäss einem der vorhergehenden Ansprüche, **dadurch gekennzeichnet, dass** mindestens ein Netz- und/oder Dispergiermittel, insbesondere auf der Basis eines Polycarboxylatethers, vorhanden ist.

10. Bindemittelzusammensetzung gemäss Anspruch 9, **dadurch gekennzeichnet, dass** die Schlacke und gegebenenfalls auch der mindestens eine weitere Füllstoff, falls vorhanden, mit dem Netz- und/oder Dispergiermittel beschichtet ist.

11. Verwendung der Bindemittelzusammensetzung gemäss einem der Ansprüche 1 bis 10 zum Verkleben, Beschichten oder Abdichten von Substraten, zum Verfüllen von Kanten, Löchern oder Fugen, als Verankerung- oder Injektionsharz, als Untergiess- oder Vergussmasse, als Bodenbelag und/oder zur Herstellung von Formkörpern.

12. Ausgehärtete Bindemittelzusammensetzung, erhalten durch Aushärten der Bindemittelzusammensetzung gemäss einem der Ansprüche 1 bis 10.

## Claims

1. Curable binder composition comprising at least one epoxy resin and at least one polyamine, comprising:
- 8% to 16% by weight of epoxy resins,
- 1% to 5% by weight of polyamines,
- 83% to 90% by weight of slag, wherein the slag is an iron-containing slag containing at least 8% by weight of iron, calculated as FeO, and the slag has a bulk density of at least 2.9 kg/l,
- 0% to 8% by weight, preferably 0.01% to 5% by weight, of further additives,
based on 100% by weight of binder composition.

2. Binder composition according to Claim 1, **characterized in that** the binder composition contains 85% to 88% by weight of slag, based on 100% by weight of the binder composition.

3. Binder composition according to either of the preceding claims, **characterized in that** the slag is selected from the group consisting of blast furnace slags, in particular blast furnace lump slags and foundry sands, steel slags, metallurgical slags, in particular copper slags, and slags from waste incineration, preference being given to blast furnace slags, steel slags and metallurgical slags.

4. Binder composition according to any of the preceding claims, **characterized in that** the slag is an iron-containing slag containing at least 10% by weight, preferably at least 15% by weight, 20% by weight, or 25% by weight, of iron, calculated as FeO.

5. Binder composition according to any of the preceding claims, **characterized in that** the slag has a bulk density of at least 3.1 kg/l, in particular at least 3.3 kg/l, especially at least 3.5 kg/l.

6. Binder composition according to any of the preceding claims, **characterized in that** the slag has a particle size of 0.05 to 16 mm, preferably 0.06 to 8 mm, more preferably 0.1 to 4 mm, especially 0.12 to 3.5 mm.

7. Binder composition according to any of the preceding claims, **characterized in that** the slag particles are conical, polygonal, cubic, pentagonal, hexagonal, octagonal, prismatic and/or polyhedral in shape.

8. Binder composition according to any of the preceding claims, **characterized in that** at least one further mineral filler selected from the group consisting of limestone powder, chalk, quartz powder, silica dust, titanium dioxide, baryte powder and alumina, preferably having a particle size of not more than 0.1 mm, is additionally present.

9. Binder composition according to any of the preceding claims, **characterized in that** at least one wetting agent and/or dispersant, in particular one based on a polycarboxylate ether, is present.

10. Binder composition according to Claim 9, **characterized in that** the slag and optionally also the at least one further filler, if present, are coated with the wetting agent and/or dispersant.

11. Use of the binder composition according to any of Claims 1 to 10 for the bonding, coating or sealing of substrates, for the filling of edges, holes or joints, as anchoring or injection resin, as a grouting or casting compound, as a floor covering and/or for production of mouldings.

12. Cured binder composition obtained by curing of the binder composition according to any of Claims 1 to 10.

## Revendications

1. Composition de liant durcissable comprenant au moins une résine époxy et au moins une polyamine, contenant :
- 8 à 16 % en poids de résines époxy,
- 1 à 5 % en poids de polyamines,
- 83 à 90 % en poids de laitier, le laitier étant un laitier contenant du fer comportant au moins 8 % en poids de fer, calculé comme FeO, et le laitier présentant une densité apparente d'au moins 2,9 kg/l
- 0 à 8 % en poids, préférablement 0,01 à 5 % en poids, d'autres additifs,
par rapport à 100 % en poids de composition de liant.

2. Composition de liant selon la revendication 1, **caractérisée en ce que** la composition de liant contient 85 à 88 % en poids de laitier, par rapport à 100 % en poids de composition de liant.

3. Composition de liant selon l'une quelconque des revendications précédentes, **caractérisée en ce que** le laitier est choisi dans le groupe constitué par des laitiers de haut-fourneau, en particulier des laitiers de haut-fourneau concassés et des sables de laitier, des laitiers d'acier, des scories métallurgiques, en particulier des laitiers de cuivre, et des laitiers provenant de l'incinération de déchets, les laitiers de haut-fourneau, les laitiers d'acier et les scories métallurgiques étant préférés.

4. Composition de liant selon l'une quelconque des revendications précédentes, **caractérisée en ce que** le laitier est un laitier contenant du fer comportant au moins 10 % en poids, préférablement au moins 15 % en poids, 20 % en poids ou 25 % en poids de fer, calculé comme FeO.

5. Composition de liant selon l'une quelconque des revendications précédentes, **caractérisée en ce que** le laitier présente une densité apparente d'au moins 3,1 kg/l, en particulier d'au moins 3,3 kg/l, notamment d'au moins 3,5 kg/l.

6. Composition de liant selon l'une quelconque des revendications précédentes, **caractérisée en ce que** le laitier présente une taille de particule de 0,05 à 16 mm, préférablement de 0,06 à 8 mm, plus préférablement de 0,1 à 4 mm, notamment de 0,12 à 3,5 mm.

7. Composition de liant selon l'une quelconque des revendications précédentes, **caractérisée en ce que** les particules de laitier présentent une forme conique, polygonale, cubique, pentagonale, hexagonale, octogonale, prismatique et/ou polyédrique.

8. Composition de liant selon l'une quelconque des revendications précédentes, **caractérisée en ce qu'**en plus, encore au moins une charge minérale supplémentaire est présente, laquelle est choisie dans le groupe constitué par la farine de calcaire, la craie, la farine de quartz, la poudre de silice, le dioxyde de titane, la farine de baryte et l'oxyde d'aluminium, préférablement comportant une taille de particule d'au maximum 0,1 mm.

9. Composition de liant selon l'une quelconque des revendications précédentes, **caractérisée en ce qu'**au moins un agent mouillant et/ou de dispersion, en particulier à base d'un éther de polycarboxylate, est présent.

10. Composition de liant selon la revendication 9, **caractérisée en ce que** le laitier et éventuellement également l'au moins une charge supplémentaire, si elle est présente, est revêtu(e) par l'agent mouillant et/ou de dispersion.

11. Utilisation de la composition de liant selon l'une quelconque des revendications 1 à 10 pour le collage, le revêtement ou l'étanchéification de substrats, pour le remplissage d'arêtes, de trous ou d'assemblages, en tant que résine d'ancrage ou d'injection, en tant que sous-couche de ballast ou masse de scellement, en tant que revêtement de sol et/ou pour la préparation de corps moulés.

12. Composition de liant durcie, obtenue par durcissement de la composition de liant selon l'une quelconque des revendications 1 à 10.
